# EUROPEAN PATENT SPECIFICATION

(11) **EP 1 775 493 B1**
(45) Date of publication and mention of the grant of the patent: **17.12.2008**
(21) Application number: 05022384.1
(22) Date of filing: 13.10.2005
(51) Int. Cl.: F16D 55/226

(54) **Sliding caliper disc brake**
Schwimmsattel-Scheibenbremse
Frein à disque à étrier coulissant

(43) Date of publication of application: 18.04.2007
(73) Proprietor: Haldex Brake Products AB, 261 24 Landskrona (SE)
(72) Inventor: Laursen, Patrick, 26033 Påarp (SE); Larsson, Håkan, 26021 Billeberga (SE); Norlander, Martin, 22464 Lund (SE); Sundvall, Peter, 25450 Helsingborg (SE)
(74) Representative: Hruschka, Jürgen

(56) References cited:
- EP-A- 0 959 259
- WO-A-03/023244
- DE-A1- 4 331 623
- DE-U1-8202005 005 79
- US-A- 4 609 079
- US-A- 5 188 202

## Description

### Technical Field

The present invention concerns disc brakes with a sliding caliper which is arranged in sliding engagement on a carrier which is fixed to the axle. The caliper contains a brake actuating mechanism which is applying a brake force so that brake pads which are arranged on both sides of a brake disc come into braking engagement with the latter. The disc brake is primarily intended for a road vehicle but may quite as well be used for a rail vehicle.

### Background of the Invention

Sliding calipers require certain space for their movement during brake actuation in the axial direction of the brake disc. In close proximity of the disc brake for a wheel, however, the location of other components such as the suspension, the steering axle or the wheel rim have to be considered during construction and assembly of the calipers so that always free movement of the latter is ensured. Further, access to the calipers should be possible for maintenance reasons and for disassembly for exchanging worn brake pads, the brake disc or other components.

This, however, will become a major problem under very tight installation conditions, such as, for example, the use of super single wheel rims or the arrangement of the disc brake in very close proximity to the suspension. In particular, when a so-called two part-caliper is used, as it is known e.g. from the applicant's European patent EP 0 942 191 B2, the specific design of such calipers may interfere with such constructional space constraints.

In EP 0 942 191 B2 the caliper is divided mainly in two parts, a housing which is arranged astraddle of the brake disc and a cover which is fixed to the housing by way of bolts. The cover comprises at least some parts of the brake actuating mechanism and constitutes a self-sustained unit with said parts which enables the insert of the unit into the housing of the caliper through an opening arranged on the rear side of the caliper, i.e. the side opposite to the wheel.

When such a caliper is mounted in very tight installation environments as described above, some drawbacks might be present. Under certain unfavourable conditions, if, for example, on the one hand, new brake pads are mounted in the disc brake, the caliper housing might get into contact with the wheel rim. On the other hand, if the brake pads are worn, the head of the bolts of the cover or parts of the cover itself might get into contact with parts of the suspension. It is obvious that such conditions are undesirable both as regards noise and functioning.

From EP 0 959 259 A2 a disc brake is known which is comprising a two-part caliper with a housing which contains the brake mechanism and a bridge bolted to the housing. The brake pads are axially guided in brake pad holders, which are stationary and fixed to a carrier for the caliper. Such a configuration is intended to provide an easier exchange of worn brake pads, as the brake pad holders do not have to be dismounted. Nevertheless, for enabling a reliable, tilting-free guidance, the cylindrical brake pads have to be relatively thick in axial direction which will lead to a larger overall width of the disc brake.

DE 43 31 623 A1 discloses a disc brake with a two-part caliper comprising a housing and a bridge. The outer brake pad is fixedly connected to the bridge, so that for replacing the brake pad, the entire bridge has to be dismounted from the housing. The brake pad has to be removed from the bridge and a new pad has to be fixed to the bridge by e.g. rivets. Such maintenance understandably proves to be cumbersome.

It is accordingly an object of the present invention to enable free movement of a caliper under all conditions also in tight installation environments.

A further object of the present invention is accordingly to facilitate the mounting of the disc brake and parts thereof under such tight installation conditions.

### Summary of the Invention

The present invention as defined in claim 1 addresses the afore-mentioned problems, which occur in such disc brakes as defined.

In particular, the disc brake according to the present invention comprises a sliding caliper in two part-form with a housing and a bridge.

The housing, which receives a brake actuating mechanism for the application of a brake force, is to be arranged astraddle of a brake disc and comprises two legs in parallel which overlap said brake disc. To the free end front surfaces of said legs, the bridge is fixed by means of bolts. In other words, the bridge of the caliper is arranged on the side of the brake disc opposite of the brake actuating mechanism.

Both the housing and the bridge of the caliper are arranged in sliding engagement with a carrier by means of guide pins, respectively. The carrier remains stationary and is fixed to the axle of the vehicle.

On both sides of the brake disc, brake pads are arranged for braking engagement with the brake disc, one inner brake pad, which directly cooperates with the brake actuating mechanism, being arranged on the application-side of the brake disc and one outer brake pad being arranged on the reaction-side of the brake disc.

According to the invention, the bridge is configured and arranged in such a way so that the back plate of the outer brake pad is vertically, horizontally and axially slideably supported in working position in the caliper after assembly of the bridge to the legs of the housing and to the carrier.

In other words, due to the fact that the bridge is arranged on the outer side of the caliper, the outer brake pad with its back plate can be easily mounted. Further, easy access to the carrier and the brake disc is provided, when the bridge gets dismounted, which facilitates assembly of these parts and maintenance.

One major advantage of the caliper design according to the invention is due to the fact that no heads of bolts could interfere with the suspension or other peripheral components, since the bolts for the fixation of the bridge are located on the outer side of the caliper only.

Moreover, due to the two part-design with the specific housing comprising legs and the bridge, the overall dimensions of the caliper can be more easily designed with respect to the present space requirements and with respect to the assembly of the caliper under such space requirements, such as e.g. for super small wheel rims.

This is further facilitated in that the inner brake pad with its back plate, as it is commonly known, is supported by the carrier, whereas according to the invention the outer brake pad with its back plate is supported by the caliper. During braking the tangential forces, which will be exerted by the brake pads substantially in the rotational direction of the brake disc due to the frictional engagement between the latter and the brake pads, will be taken up by the carrier for the inner brake pad and by the caliper for the outer brake pad.

According to one aspect of the invention, the back plate of the outer brake pad is supported by the legs of the housing which take up the tangential forces. At the regions of their free end front surfaces, each leg of the housing comprises a support face in substantially vertical orientation. Both vertical support faces do face each other and serve as an abutment for the short sides of the back plate of the outer brake pad, respectively.

In one embodiment, the carrier is comprising at least one horizontal support face for the back plate of the outer brake pad, similar as for the back plate of the inner brake pad. In another embodiment, at least one horizontal support face is arranged on the side of the bridge facing the brake disc. In both embodiments, the bridge is stabilizing and locating the outer back plate of the brake pad in position and for guidance, when the bridge is bolted to the legs of the housing.

In an alternative embodiment according to another aspect of the invention, such stabilization and guidance of the back plate of the outer brake pad is realized by substantially vertical support faces which are arranged on the inner side of the bridge and which face each other. Preferably, said vertical support faces are formed integrally with the bridge as one piece. For further support and transmission of the tangential forces exerted by the back plate of the outer brake pad during braking, said vertical support faces do abut against corresponding support faces which are formed on the legs of the housing at the region of their free ends. Also here, horizontal support faces for the back plate of the outer brake pad can be either arranged on the carrier or on the bridge directly.

In all embodiments, the bridge serves as the means to stabilize the back plate of the outer brake pad for its locating and guidance during and after the mounting of the bridge to the housing.

Further objects and advantages of the present invention will become obvious for a person skilled in the art when reading the detailed description below of preferred embodiments.

### Brief Description of the Drawings

The invention will be explained further below by way of examples and with reference to the enclosed drawings. In the drawings:
Fig. 1 is an exploded perspective view of a first embodiment of a disc brake according to the invention;
Fig. 2 is a top view of the embodiment of Fig. 1;
Fig. 3a is a partial cross-section along X-X of Fig. 2;
Fig. 3b is the partial cross-section of Fig. 3a shown in a perspective view;
Fig. 4 is an exploded perspective view of a second embodiment of a disc brake according to the invention;
Fig. 5 is a top view of the embodiment of Fig. 4;
Fig. 6a is a partial cross-section along Y-Y of Fig. 5;
Fig. 6b is partial the cross-section of Fig. 6a shown in a perspective view;
Fig. 7 is an exploded perspective view of a third embodiment of a disc brake according to the invention;
Fig. 8 is a top view of the embodiment of Fig. 7;
Fig. 9a is a partial cross-section along Z-Z of Fig. 8; and
Fig. 9b is the partial cross-section of Fig. 9a shown in a perspective view.

### Detailed Description of Preferred Embodiments

As used in this description the expressions "outer" and "inner" are used to describe the placement of components, or parts of components, as seen in an axial direction from the centre of the vehicle, "outer" means a placement more far from the vehicle centre-line to the side of the vehicle.

Identical or similar components in the different embodiments are bearing the same reference numerals. A person skilled in the art realises that the principles of the present invention apply for disc brakes having many different structures. Only parts important for the understanding of the present invention will be specifically referred to in the description below. For the ease of better illustration, the brake disc is not shown in the Figures.

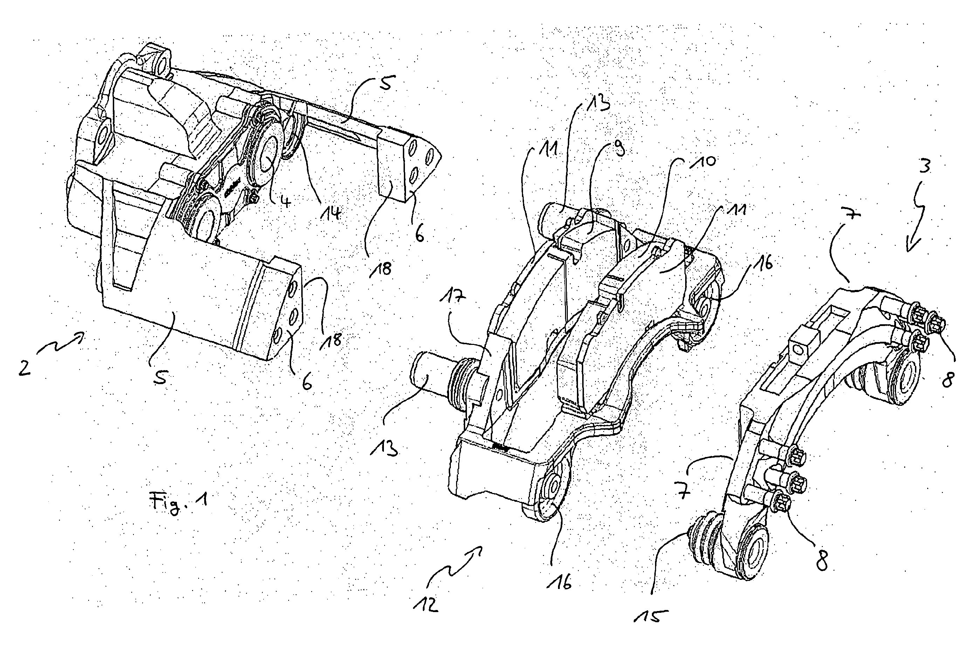

In Fig. 1 a first embodiment of the disc brake according to the invention is shown in an exploded perspective view.

The disc brake comprises a caliper 1 which consists of two parts, an inner housing 2 and an outer bridge 3. The housing 2 receives a brake actuating mechanism, two thrust tappets 4 of which can be seen on the side of the housing 2 facing the brake disc.

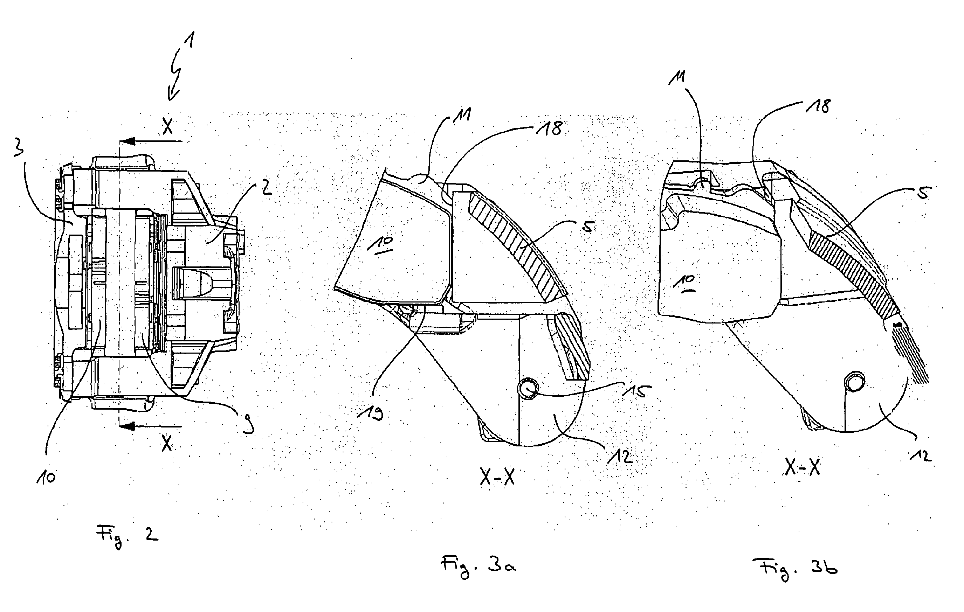

The housing 2 is preferably cast as one piece and comprises two parallel legs 5 which are arranged astraddle the brake disc, as can be seen e.g. in Fig. 2, and which end in a free end front surface 6, respectively.

To each of said free end front surfaces 6 of the legs 5, the bridge 3 is mounted with corresponding front surfaces 7 by means of bolts 8, whereby the two part-caliper 1 will be completed.

The housing 2 and the bridge 3 do embed brake pads, an inner brake pad 9 and an outer brake pad 10, which are arranged on both sides of the brake disc (not shown), respectively. Each brake pad 9 and 10 is formed integral with a back plate 11, respectively.

A carrier 12 is arranged between the housing 2 and the bridge 3 and is fixed to an axle by intermediate parts (not shown). The carrier 12 receives the caliper 1 in a sliding manner.

For that purposes the carrier 12 comprises guide pins 13 which are received by sleeves 14 in the housing 2. Further, the bridge 3 comprises guide pins 15 which interact with sleeves 16 of the carrier 12. Thereby, the caliper 1, i.e. the housing 2 and the bridge 3 bolted thereto, can slide with respect to the carrier 12 as one unit.

As can be seen in Fig. 1, the inner brake pad 9 with its back plate 11 is supported on the inner side of the substantially U-shaped carrier 12 by means of supports 17, which are formed integral with the carrier 12 and embed the inner brake pad 9 and its back plate 11 so as to receive tangential forces from the inner brake pad 9 and its back plate 11 when being in engagement with the brake disc during braking after the thrust tappets 4 pushed the inner brake pad 9 forward.

On contrary thereto, the outer brake pad 10 and its back plate 11 are supported by the housing 2, as can be seen from Figs. 3a and 3b, which housing 2 receives the tangential forces of the outer brake pad 10 and its back plate 11.

For that purpose, the legs 5 of the housing 2 comprise in the region of their free end front surfaces 6 vertical supports faces 18, which face each other and against which the short sides of the back plate 11 of the outer brake pad 10 abut during the braking engagement.

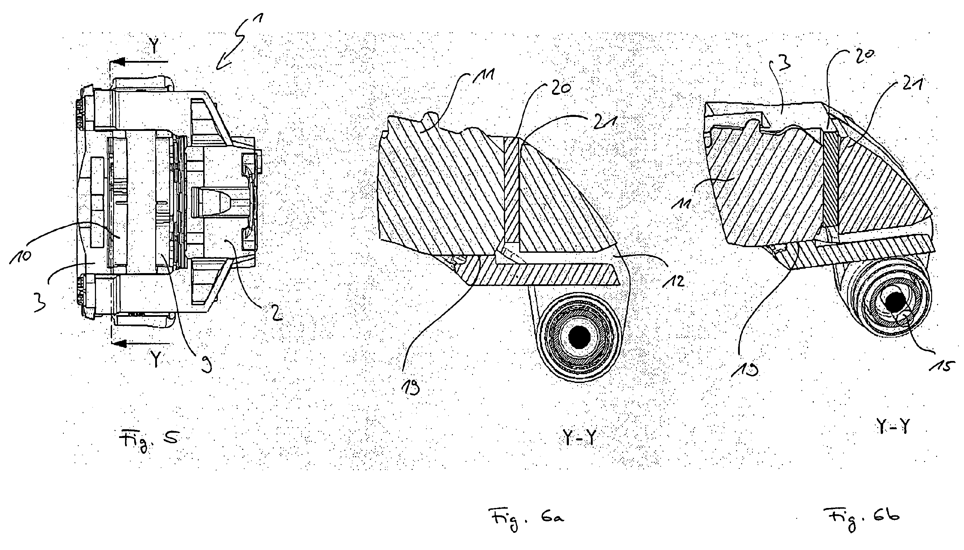

In addition, the back plate 11 of the outer brake pad 10 is guided on horizontal support faces 19, which are provided by the carrier 12 and can better be seen in Figs. 6a and 6b.

As can be seen from Fig. 1, the back plate 11 of the outer brake pad 10 will be stabilized and located in position by the bridge 3, when the latter is mounted to the housing 2 after assembly of the caliper 1.

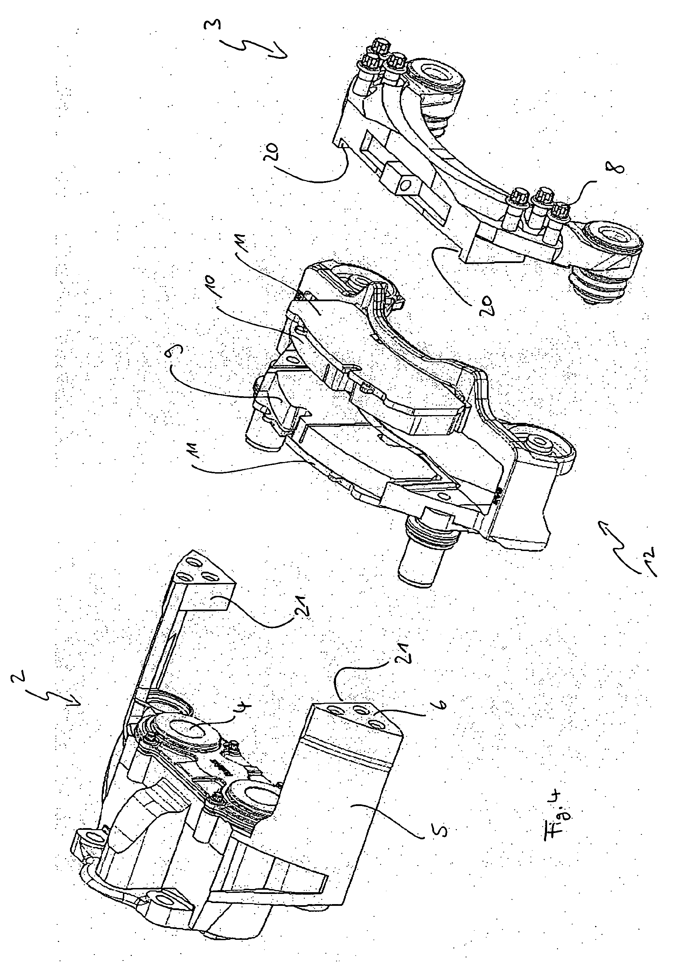

In Fig. 4 a second embodiment of the caliper 1 of the disc brake according to the invention is shown in exploded perspective view.

In principle this second embodiment corresponds to the first embodiment with the difference that the support for the back plate 11 of the outer brake pad 10 is provided by the bridge 3 directly.

The bridge 3 comprises for that purpose substantially vertical support faces 20 which face each other and which preferably are integrally formed with the bridge 3 at the side facing the brake disc as one piece. As can be seen from Fig. 6b, the vertical support faces 20 of the bridge 3 are configured so that only the back plate 11 of the outer brake pad 10 abuts against the faces 20.

Also in this embodiment, the back plate 11 of the outer brake pad 10 is horizontally guided by the horizontal support faces 19 of the carrier 12.

The vertical support faces 20 of the bridge 3 in turn are supported on both sides by abutments 21, which are arranged at the free end regions of the legs 5 of the housing 2. Thereby, the tangential forces taken up by the vertical support faces 20 of the bridge 3 are then directly transferred into the housing 2.

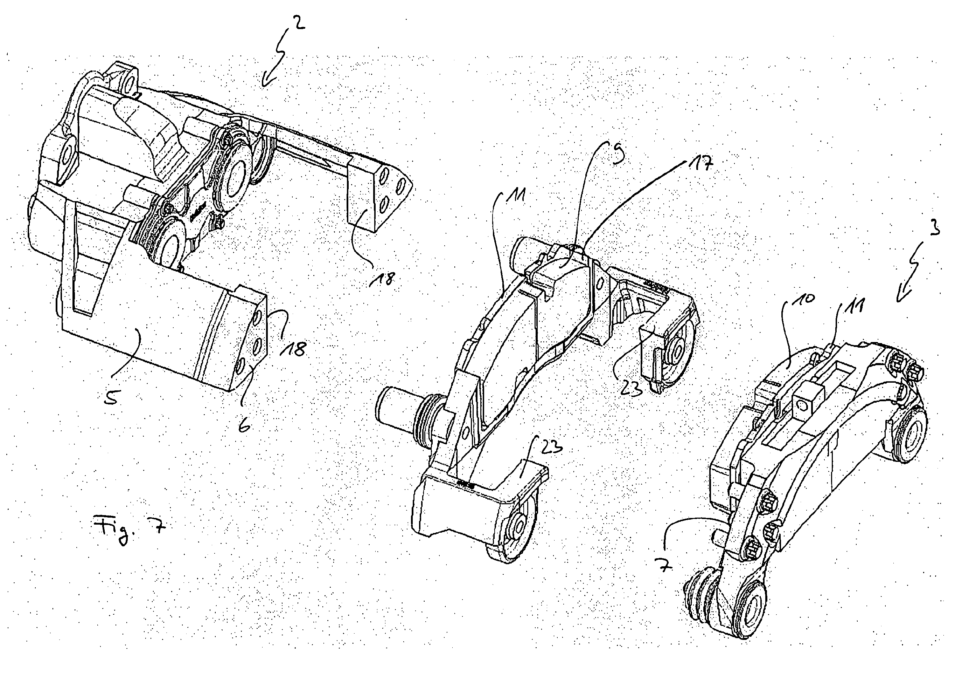

In Fig. 7 a third embodiment of a disc brake according to the invention is disclosed.

The third embodiment substantially corresponds to the first embodiment with the difference that the bridge 3 is comprising a horizontal support face 22 for the back plate 11 of the outer brake pad 10. When the bridge 3 is bolted to the housing 2, said horizontal support face 22 is received in the space formed by two free opposite ends 23 in the outer side of the carrier 12.

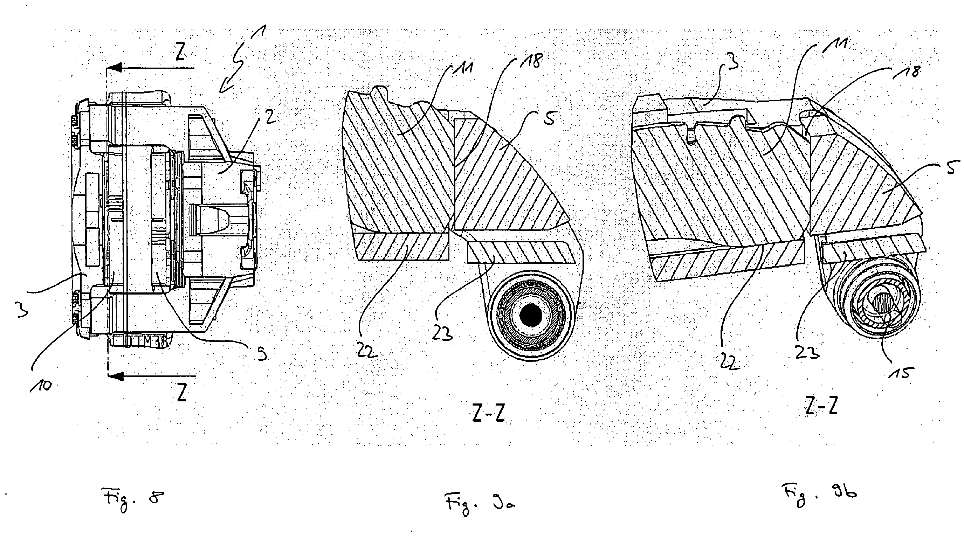

As can be seen in Fig. 9b, the horizontal support face 22 receives only the back plate 11 of the outer brake pad 10.

Vertically, the back plate 11 is again supported by the vertical support faces 18 of the legs 5 of the housing 2.

A person skilled in the art realises that in all the embodiments of the caliper 1 according to the invention as described above, the bridge 3 actually serves to stabilize the back plate 11 of the outer brake pad 10 with regard to the carrier 12 and the brake disc, which facilitates the guidance and its locating of the back plate 11 of the outer brake pad 10.

### List of reference numerals:

- 1: Caliper
- 2: Housing
- 3: Bridge
- 4: Thrust tappets
- 5: Legs of the housing
- 6: Front surface of legs
- 7: Front surface of bridge
- 8: Bolts
- 9: Inner brake pad
- 10: Outer brake pad
- 11: Back plate
- 12: Carrier
- 13: Guide pins
- 14: Sleeves
- 15: Guide pins
- 16: Sleeves
- 17: Supports of carrier
- 18: Vertical support faces of housing
- 19: Horizontal support face of carrier
- 20: Vertical support faces of bridge
- 21: Abutments of housing
- 22: Horizontal support faces of bridge
- 23: Free ends of carrier

## Claims

1. Disc brake for a vehicle comprising a caliper (1) and a carrier (12), the carrier (12) carrying the caliper (1) in sliding arrangement, and a brake actuating mechanism contained in a housing (2) of said caliper (1) to apply a brake force for braking engagement of brake pads (9;10) with a brake disc, the caliper (1) is comprising legs (5) protruding from the housing (2) so as to be arranged astraddle of a brake disc and a bridge (3) to be attached to the legs (5) of the housing (2) at the reaction-side of the brake disc, whereby in the caliper (1) one inner brake pad (9) with a back plate (11) being arranged on the application-side of the brake disc and one outer brake pad (10) with a back plate (11) being arranged on the reaction-side of said brake disc, **characterized in that** the bridge (3) is configured and arranged in such a way so that the back plate (11) of the outer brake pad (10) is vertically, horizontally and axially slideably supported in working position in the caliper (1) after assembly of the bridge (3) to the legs (5) of the housing (2) and to the carrier (12).

2. Disc brake according to claim 1, in which the housing (2) comprises two legs (5) overlapping the brake disc, whereby the bridge (3) is to be bolted to the free end front surfaces (6) of said legs (5), respectively.

3. Disc brake according to claim 1 or 2, in which the bridge (3) is arranged in sliding engagement with the carrier (12).

4. Disc brake according to one of claims 1, 2 or 3, in which the inner brake pad (9) with its back plate (11) is being supported by the carrier (12) and the outer brake pad (10) with its back plate (11) is being supported by the caliper (1) so as to take up tangential forces of the brake pads (9;10) and their back plates (11) during brake actuation, respectively.

5. Disc brake according to claim 4, in which each leg (5) comprises a substantially vertical support face (18) for the back plate (11) of the outer brake pad (10) at the region of its free end front surface (6), whereby the vertical support faces (18) are facing each other.

6. Disc brake according to claim 4, in which the bridge (3) is comprising substantially vertical support faces (20) for the back plate (11) of the outer brake pad (10), which are facing each other.

7. Disc brake according to claim 6, in which the vertical support faces (20) of the bridge (3) are being supported by the legs (5) at the region of their free end front surfaces (6), respectively.

8. Disc brake according to claim 5, 6 or 7, in which the carrier (12) or the bridge (3) is comprising at least one substantially horizontal support face (19; 22) for the back plate (11) of the outer brake pad (10).

## Patentansprüche

1. Scheibenbremse für ein Fahrzeug aufweisend einen Bremssattel (1) und einen Träger (12), wobei der Träger (12) den Bremssattel (1) in gleitender Anordnung trägt, und einen Bremsbetätigungsmechanismus, der in einem Gehäuse (2) des Bremssattels (1) aufgenommen ist, um eine Bremskraft für einen Bremseingriff von Bremsbelägen (9; 10) mit einer Bremsscheibe auszuüben, wobei der Bremssattel (1) Streben (5), die sich von dem Gehäuse (2) erstrecken, um rittlings von einer Bremsscheibe angeordnet zu sein, und eine Brücke (3) aufweist, die an den Streben (5) des Gehäuses (2) an der Reaktionsseite der Bremsscheibe anordenbar ist, wobei in dem Bremssattel (1) ein innerer Bremsbelag (9) mit einer Rückplatte (11) an der Betätigungsseite der Bremsscheibe angeordnet ist und ein äußerer Bremsbelag (10) mit einer Rückplatte (11) auf der Reaktionsseite der Bremsscheibe angeordnet ist, **dadurch gekennzeichnet, dass** die Brücke (3) in einer solchen Art und Weise konfiguriert und angeordnet ist, dass die Rückplatte (11) des äußeren Bremsbelags (10) nach Anordnung der Brücke (3) an den Streben (5) des Gehäuses (2) und an dem Träger (12) vertikal, horizontal und axial in gleitender Art und Weise in der Betätigungsposition des Bremssattels (1) gelagert ist.

2. Scheibenbremse nach Anspruch 1, bei welcher das Gehäuse (2) zwei Streben (5) aufweist, die die Bremsscheibe übergreifen, wobei die Brücke (3) jeweils an die freien vorderen Stirnflächen (6) der Streben (5) angeschraubt ist.

3. Scheibenbremse gemäß Anspruch 1 oder 2, bei welcher die Brücke (3) in gleitendem Eingriff mit dem Träger (12) angeordnet ist.

4. Scheibenbremse nach einem der Ansprüche 1, 2 oder 3, bei welcher der innere Bremsbelag (9) mit seiner Rückplatte (11) durch den Träger (12) gelagert ist und der äußere Bremsbelag (10) mit seiner Rückplatte (11) durch den Bremssattel (1) gelagert ist derart, dass die Tangentialkräfte von den Bremsbelägen (9; 10) und ihren Rückplatten (11) jeweils während der Bremsbetätigung aufgenommen werden.

5. Scheibenbremse nach Anspruch 4, bei welcher jede Strebe (5) eine im Wesentlichen vertikale Lagerfläche (18) für die Rückplatte (11) des äußeren Bremsbelags (10) in dem Bereich ihrer freien vorderen Stirnfläche (6) aufweist, wobei die vertikalen Lagerflächen (18) sich einander gegenüber liegen.

6. Scheibenbremse nach Anspruch 4, bei welcher die Brücke (3) im Wesentlichen vertikale Lagerflächen (20) für die Rückplatte (11) des äußeren Bremsbelags (10) aufweist, die sich einander gegenüber liegen.

7. Scheibenbremse nach Anspruch 6, bei welcher die vertikalen Lagerflächen (20) der Brücke (3) durch die Streben (5) jeweils in dem Bereich ihrer freien vorderen Stirnflächen (6) gelagert sind.

8. Scheibenbremse nach Anspruch 5, 6 oder 7, bei welcher der Träger (12) oder die Brücke (3) zumindest eine im Wesentlichen horizontale Lagerfläche (19; 22) für die Rückplatte (11) des äußeren Bremsbelags (10) aufweist.

## Revendications

1. Frein à disc pour un véhicule comprenant un étrier de frein (1) et un chariot (12), où le chariot (12) porte l'étrier de frein (1) dans une disposition de glissement, et un mécanisme pour l'actionnement du frein contenu dans un boîtier (2) dudit étrier de frein (1) pour appliquer une force de freinage aux plaquettes de frein (9; 10) avec un disque de frein, l'étrier de frein (1) comprenant des branches (5) faisant saillies à partir du boîtier (2), de manière à être disposées de façon enfourchée au disque de frein et un pont (3) susceptible d'être fixé aux branches (5) du boîtier (2) sur le côté de réaction du disque de frein, où une plaquette de frein (9) intérieure avec une plaque arrière (11) est disposée sur le côté d'application du disque de frein, et une plaquette de frein (10) extérieure avec une plaque arrière (11) est disposée sur le côté d'application dudit disque de frein, **caractérisé en ce que** le pont (3) est configuré et disposé de manière à ce que la plaque arrière (11) de la plaquette de frein extérieure (10) est supportée verticalement , horizontalement et axialement coulissant dans la position de travail dans l'étrier de frein (1) après l'assemblage du pont (3) avec les branches (5) du boîtier (2) et avec le chariot (12).

2. Frein à disque selon la revendication 1, où le boîtier (2) comprend deux branches (5) chevauchant le disque de frein, où le pont (3) est boulonné respectivement aux surfaces libres frontales extrêmes (6) desdites branches (5).

3. Frein à disque selon la revendication 1 ou 2, où le pont (3) est disposé selon un engagement de glissement avec le chariot (12).

4. Frein à disque selon une des revendications 1, 2 ou 3 où la plaquette de frein intérieure (9) avec sa plaque arrière (11) est supportée par le chariot (12) et la plaquette de frein extérieure (10) avec sa plaque arrière (11) est supportée par l'étrier de frein (1) de manière à absorber pendant l'actionnement du frein respectivement les forces tangentielles des plaquettes de frein (9; 10) et de leurs plaques arrières (11).

5. Frein à disque selon la revendication 4, où chaque branche (5) comprend une face (18) de support essentiellement verticale pour la plaque arrière (11) de la plaquette de frein extérieure (10) dans la zone de ses surfaces libres frontales extrêmes (6), où les faces de support verticales (18) sont opposées l'une par rapport à l'autre.

6. Frein à disque selon la revendication 4, où le pont (3) comprend des faces de support essentiellement verticales (20) pour la plaque arrière (11) de la plaquette de frein extérieure (10), lesdites faces de support verticales étant opposées l'une par rapport à l'autre.

7. Frein à disque selon la revendication 6, où les faces verticales de support (20) du pont (3) sont supportées respectivement par les branches (5) dans la zone des surfaces libres frontales extrêmes (6).

8. Frein à disque selon une des revendications 5, 6 ou 7, où le chariot (12) ou le pont (3) comprennent au moins une face (19 ; 22) de support essentiellement horizontale pour la plaque arrière (11) de la plaquette de frein extérieure (10)
